# EUROPEAN PATENT SPECIFICATION

(11) **EP 4 493 363 B1**
(45) Date of publication and mention of the grant of the patent: **04.02.2026**
(21) Application number: 23712233.8
(22) Date of filing: 17.03.2023
(51) Int. Cl.: B25J 15/00, B25J 15/02, A01G 9/00, A01G 9/08

(54) **SYSTEM AND METHOD FOR HANDLING PLANTS OR PLANT RECEPTACLES**
SYSTEM UND VERFAHREN ZUR HANDHABUNG VON PFLANZEN ODER PFLANZENBEHÄLTERN
SYSTÈME ET PROCÉDÉ PERMETTANT DE MANIPULER DES PLANTES OU DES RÉCIPIENTS DE PLANTES

(30) Priority: 17.03.2022 EP 22162781
(43) Date of publication of application: 22.01.2025
(73) Proprietor: suiteg GmbH, 50858 Köln (DE)
(72) Inventor: VESPER, Martin, 42399 Wuppertal (DE); DECKERS, Volker, 52538 Gangelt (DE); RYBAK, Vasyl, Kiev, 04119 (UA)
(74) Representative: Kutzenberger Wolff & Partner
(86) International application number: PCT/EP2023/056869
(87) International publication number: WO 2023/175135

(56) References cited:
- WO-A1-2020/227191
- JP-A- S62 251 027
- JP-B2- 5 416 642
- US-A1- 2013 213 841
- US-A1- 2017 142 912
- US-B2- 7 018 163

## Description

### Background

The present invention relates to a system for handling plants or plant receptacles. Traditionally, plants are grown by farmers by way of field cultivation. For this purpose, specific atmospheric conditions are indispensable for successful cultivation. In particular, the soil must be rich in humus and hence provide sufficient amounts of nutrients. Furthermore, the soil as well as the ambient air must provide enough humidity so as to promote plant growth. Moreover, adequate radiation must be ensured. In addition and importantly, plant cultivation is inextricably linked to a provision of sufficient acreage.

The global population and therefore the demand for sufficient food is increasing incessantly. At the same time - among others due to anthropogenic industrial emissions and other human interferences in the natural planetary systems over the course of globalization - the climate is subject to long-term changes, especially to unfavorable changes from the standpoint of plant cultivation: Heat waves and water scarcity, but also a lack of soil nutrients as a consequence of monocultural farming et cetera are some of the challenging phenomena and examples for the deterioration of cultivation conditions that farmers are currently faced with and most likely will be confronted with on a regular basis in the future. According to scientific disclosures the adverse agricultural conditions will subsist and the challenging phenomena will occur even more frequently, when steady, predictable and controllable cultivation conditions are actually required for optimal agricultural outputs.

One approach in solving this problem can be found in the so-called inhouse or vertical farming technologies of growing crops in vertically stacked layers arranged inside buildings, containers or the like. This technology incorporates controlled-environment agriculture in order to optimize plant growth and to increase crop yield and goes along with a smaller cropland. Furthermore, vertical farming enables a decrease of human interference in the cultivation process due to automatization which increases the overall performance since machines don't need sleep or vacation and are not affected by sentiment fluctuations and thus are much less prone to errors. Automatization is expected to increase over time along with developments in machine learning and artificial intelligence. Also, vertical farming goes hand in hand with the benefit of reducing transportation efforts since the cultivation can be carried out in urban territories, close to consumers, thereby rendering pollutive and costly shipments superfluous. However, a current drawback of this approach is that vertical farming is associated with a tremendous energy consumption compared to classical field cultivation due to the fact that lighting, climate control and nutrients must be provided entirely artificially. Consequently, vertical farming can only be a solution to the afore-mentioned challenges when energy consumption and costs are reduced and degree of automation as well as crop yield are increased significantly. An example of vertical farming is disclosed in US2017/142912, wherein an automated multi-tool engages the gripping collar of the plant receptacles for moving them inside the plant growing system.

### Disclosure of the invention

It is an object of the present invention to provide a system and a method for handling plants or plant receptacles addressing at least some of the above-mentioned challenges and drawbacks.

The object of the present invention is achieved by a system according to claim 1.

According to the present invention, it is advantageously possible to transfer plants or plant receptacles to designated positions within a vertical farming facility, such as a container. A gripper head comprising two gripping elements can ensure firm clamping of the plants or plant receptacles prior to transportation. By designing the gripping elements such that they are movable towards each other secure clamping can be ensured. Clamping improvement can be achieved in many ways. It is conceivable that specific materials can be employed for the manufacturing of the gripper head, for instance rubber, in order to maximize a friction coefficient between objects or materials in contact. It is also conceivable that other objects consisting of chosen materials, such as rubber, are attached to the gripping elements for the purpose of friction maximization. Also, different sizes and geometries of gripping elements can be used for clamping enhancement when designing the gripping elements. Once a tight attachment between the gripper head and the plant or plant receptacle is realized transportation can be carried out along different spatial axes within the vertical farming facility, especially to different heights. By means of corresponding sensors, actors and an electronic control unit clamped plants can be moved optimally by circumventing physical obstacles to pre-determined locations. Once the plants have reached their predefined targeted destination the gripper head can be transferred from the clamping position into a release position by moving the gripping elements off each other, thereby releasing the previously clamped plant or plant receptacle. All in all, it is possible to increase efficiency with a gripper to such an extent that the overall energy balance of vertical farming along with eventual further processing becomes better compared with the energy balance of conventional field cultivation, so that the above-mentioned general challenges and drawbacks of field cultivation can be solved at least to some extent.

According to the present invention, it is preferred that each first lateral holding arm has a protruding free end and the free ends of the two first lateral holding arms are spaced apart from each other along a lateral direction. Elevating any three-dimensional body is possible by placing a support or holding arm precisely beneath the center of gravity of the considered body and raising it by raising the support or holding arm. However, any lateral force could tilt the body. A safer and more solid elevation and transportation requires at least two holding arms, preferably and according to the invention such that the plant or plant receptacle to be elevated is placed between the two first holdings arms. The first gripping element can be formed like a table fork that traditionally comprises four teeth, wherein the two middle teeth are omitted, leaving only the two outer teeth. The two first holding arms can each be moved synchronously along two opposing sides of the plant or plant receptacle up to a predefined and desired position. In that very position at least a portion of the plant or plant receptacle can be formed directly above each holding arm. Elevating the first gripping element with its two first holdings arms then results in elevating the plant or plant receptacle - similar to a forklift elevating a pallet. It is conceivable that the lateral spacing between the two first holding arms is variable. In other words, the gripping element could be designed similar to pliers in order to clamp the plant or plant receptacle between its two first holding arms. Also, the holding arms can be arranged parallel, convergent or divergent relative to each other. It is also conceivable that the holding arms are curved, depending on the exact geometry of the plant (receptacle).

Preferably, each second lateral holding arm has a protruding free end and the free ends of the two second lateral holding arms are spaced apart from each other along a lateral direction. The above-mentioned configuration, advantages and technical effects of the first gripping element also apply to the second gripping element. In a particularly preferred embodiment of the invention the first and second gripping element can be formed identically, thereby enabling advantageous clamping of the plant or plant receptacle in-between the gripping elements. Particularly preferred is an embodiment, wherein the second gripping element is movably configured so that it can press down the plant or plant receptacle.

In a preferred embodiment of the present invention, the first gripping element and the second gripping element are movable relative to each other along a vertical direction being transverse to the lateral direction to transfer the gripping head between the clamping position and the release position. The movability of the gripping elements relative to each other ensures clamping and releasing of plants or plant receptacles. In an advantageous configuration the direction of motion of one or both gripping elements is directed along a vertical axis during clamping, such as while getting hold of a plant receptacle that is arranged on a tray. It is important to note that the vertical direction as defined in the invention is oriented relatively to the lateral direction and does not necessarily correspond to a fixed vertical direction oriented perpendicular to a ground. The vertical direction thus can be tilted relative to an axis perpendicular to the horizontal ground, for instance while releasing the plant or plant receptacle in its targeted position. An inclination of the plant (receptacle) in its end position can be desirable to improve radiation conditions for a multitude of plants or plant receptacles.

According to the present invention, the first gripping element is an upper gripping element, and the second gripping element is a bottom gripping element, wherein the upper gripping element is movable along the vertical direction relatively to the bottom gripping element. It is conceivable that only one of the gripping elements, the upper gripping element, is movable while the other, the bottom gripping element, remains stationary during clamping and/or releasing. It is also conceivable that both gripping elements are movable in order to realize the clamping function of the gripper.

In a preferred embodiment of the present invention, the upper gripping element comprises an upper holding means to which the two first lateral holding arms are connected, wherein the upper holding means is angled or curved. The two first holding arms can be formed separately from the upper holding means. Alternatively, the two first holding arms and the upper holding means can be formed as a single piece, so to speak monolithically. A specific shape of the upper holding means, for instance angled or curved, can be desirable to meet application-specific requirements. Furthermore, the upper gripping element - as well es the bottom gripping element - can be made by a sheet metal that is easy to curve. Also, the use of sheet metals as opposed to massive bodies enable more economical manufacturing.

According to the present invention, the gripper comprises an articulated arm, preferably rotatably, supporting the gripper head, wherein the articulated arm is pivotably connected to a further articulated arm which is supported by a base member, wherein the articulated arm and/or the further articulated arm is pivotable around at least two independent spatial axes. A plurality of articulated arms that are connected to each other and support the gripper head enable motion, rotation and/or pivoting along and around all three spatial axes. The base member that indirectly supports the gripper head can be stationary or movable within the vertical farming facility, thereby increasing the number of degrees of freedom of the gripper head.

According to the invention, the system comprises plant receptacle, wherein the plant receptacle comprises a base element providing a cavity for a plant and at least two rim portions. It is conceivable for the plant receptacle to be formed in a plurality of different configurations. The base member can be massive or comprise recesses. It can be elongated with a relatively small cross section or rather wide with a comparatively great cross section. Furthermore, the base member can have a polygonal or a circular cross section or a combination thereof. The volume of the cavity can depend on a wall thickness of the base member and provides a space for a potting compost needed to provide the plant with sufficient amounts of nutrients and moisture. Rim portions that are arranged at the base member function as means that help facilitate and improve the connectivity between the gripper and the plant receptacle and therefore ensure safe transport to a predefined position within the vertical farming facility. The at least two rim portions can be arranged anywhere at the exterior of the plant receptacle, particularly at an end section of the base member with respect to a longitudinal axis of the plant receptacle. The plant receptacles can be made of a plastic or a biodegradable material.

According to the invention, the two rim portions extend outwardly from opposing sides of the base element, wherein preferably the rim portions are part of a single-piece circumferential rim of the base element. The base member and the rim are preferably a one-piece element, for instance manufactured by way of injection molding. Pellets employed in the manufacturing of the plant receptacle can also comprise dyestuff for a multitude of colors. The outwardly directed extension of the rim serves as a protrusion and can act as a connecting means to the gripper. The rim can be arranged perpendicular to a longitudinal axis of the plant receptacle or at least partially tilted with respect to the longitudinal axis. The rim can be considered comprising different portions, wherein delimitations of the different portions can be set at transition spots - such as corners - of the plant receptacle.

According to the present invention, in the clamp position the rim portions of the base element are clamped between the first gripping element and the second gripping element for connecting the plant receptacle to the gripper. It is conceivable that only some rim portions are clamped by the gripping elements in the clamping position whereas others can be vacant. Clamping only rim portions in order to create a sufficiently solid connection between the gripper and the plant receptacle - regardless of how exactly the rim and its portions are formed - and thus focusing the clamping forces only on the rim allows for the base member configuration to be determined irrespective of the clamping forces. Preferably, the rim is arranged at a head section of the receptacle since such an arrangement increases the accessibility of the receptacle by the gripper. What is more, inserting a receptacle up to a specific depth of an orifice can prove all the more feasible if the gripper can clamp the receptacle at an end or head section of the base member.

According to the invention, the system comprises the vertical farming facility wherein the vertical farming facility can comprise an, in particular substantially vertical, planting wall, wherein the planting wall comprises multiple orifices, in particular grooves, into which plants or plant receptacles are insertable. It is conceivable that the vertical farming facility comprises a multitude of planting walls that are movably formed in order to achieve a more compact facility. The movability of the planting walls can also help optimize the motion of the gripper (head), for instance by decreasing the distance between a targeted planting wall and the gripper head. Planting walls can be used bilaterally by inserting plants or plant receptacles on either side of the walls. Plants or plant receptacles can be inserted into and removed from the planting walls at different heights and along entire widths of the walls in order to optimally use the wall area for plant cultivation. The plants or plant receptacles can be deployed in dedicated orifices in the planting walls, wherein the orifices can be characterized by a multitude of geometries. The plants or plant receptacles can be mechanically stabilized, particularly by a foam material that is arranged in, on or around the orifices or a combination thereof. Plants and plant receptacles can be inserted preferably with a tilt, in other words, in an inclined position relative to the respective planting wall. It is furthermore conceivable and preferred that the planting walls are designed such that a liquid flows through them, providing the plants with a nutrient solution. In such an embodiment of the invention, the plant receptacles comprise recesses so that the nutrient solution is distributed to the plants advantageously.

According to the present invention, the gripper is configured to pick and place plants or plant receptacles from or into the orifices of the planting wall. Above-mentioned advantageous embodiments of the gripper and system also apply for the gripper that is configured to pick and place plants or plant receptacles from or into the orifices of the planting wall.

Another subject of the present invention is a method according to claim 10 for handling plants or plant receptacles
in a vertical farming facility, wherein plants or plant receptacles are picked from a tray by a gripper according to one of the above-mentioned embodiments in a first step and wherein the picked plants or plant receptacles are placed by the gripper in orifices of an, in particular substantially vertical, planting wall in a second step.

The inventive method provides the same advantages as mentioned in connection with the afore-mentioned gripper and system. Any explanations and preferred embodiments described for the gripper and system apply also for the method and vice versa.

The supply of plants to the vertical farming facility can be made in bulk, particularly by means of trays upon which the plants and/or plant receptacles are arranged. The trays can be gathered at a nursery station in a proximity of an entrance of the vertical farming facility, the nursery station being within the range of motion of the gripper, in particular inside the vertical farming facility. In a first step, the individual plants or plant receptacles can be connected to the gripper and transported sequentially, that is one by one, to the planting wall. It is also conceivable that the plants or plant receptacles are transported tray by tray to a vicinity of a targeted planting wall, prior to the first step, plants or plant receptacles are only then picked individually from the tray. In a second step, the plants or plant receptacles are inserted into dedicated orifices in the planting wall.

According to the present invention, it is furthermore preferred that the gripper head is transferred from the release position into the clamping position during the first step and wherein the gripper head is transferred from the clamping position into the release position during the second step. It is conceivable to break down the first step into two actions. The transition from the release position into the clamping position can be considered as the initial action of the first step. Moreover, elevating the clamped plant or plant receptacle from the tray can be considered as the second move of the first step. Equally, it is conceivable to break down the second step into two actions. The inserting of the plant or plant receptacle into the planting wall can be interpreted as the first action of the second step, whereas the subsequent transition from the clamping position into the release position can be deemed the second action of the second step.

In a preferred embodiment of the invention, plants or plant receptacles are picked from the planting wall by the gripper in a third step and removed by the gripper in a fourth step. Analogously to the first step, it is conceivable to break down the third step into two actions: a clamping and a removing action. After the plants have reached their necessary and/or planned maturity, they can be removed from the wall. For this purpose, in a first action of the third step, the gripper can be transferred such that transitioning the gripper from a release position into a clamping position ensures connection between the gripper and the plant or plant receptacle. In a second action of the third step, the plant or plant receptacle can be elevated and/or removed from the planting wall. After having completed the third step, removal of the plant or plant receptacle, the fourth step, can be performed. It is conceivable to assemble the plants or plant receptacles after their removal from the planting walls in dedicated repositories or collecting means prior to leaving the vertical farming facility.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

- Figure 1: illustrates a gripper head in a release position according to an exemplary first embodiment of the present invention.
- Figure 2: illustrates schematically a gripper head along with a plant receptacle and a plant therein in a release position according to an exemplary second embodiment of the present invention.
- Figure 3: illustrates schematically the arrangement depicted in figure 2 in a clamping position.
- Figure 4: illustrates a tray with the two plant receptacles therein.
- Figure 5: illustrates schematically an embodiment of a vertical farming facility according to the present invention in a perspective view.
- Figure 6: illustrates the gripper seizing a tray from the nursery station within the vertical farming facility depicted in figure 5.
- Figure 7: illustrates the gripper deploying a plant receptacle into a planting wall within the vertical farming facility depicted in figure 5.

### Detailed description

The present invention will be described with respect to particular embodiments and with reference to certain drawings but the invention is not limited thereto but only by the claims. The drawings described are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

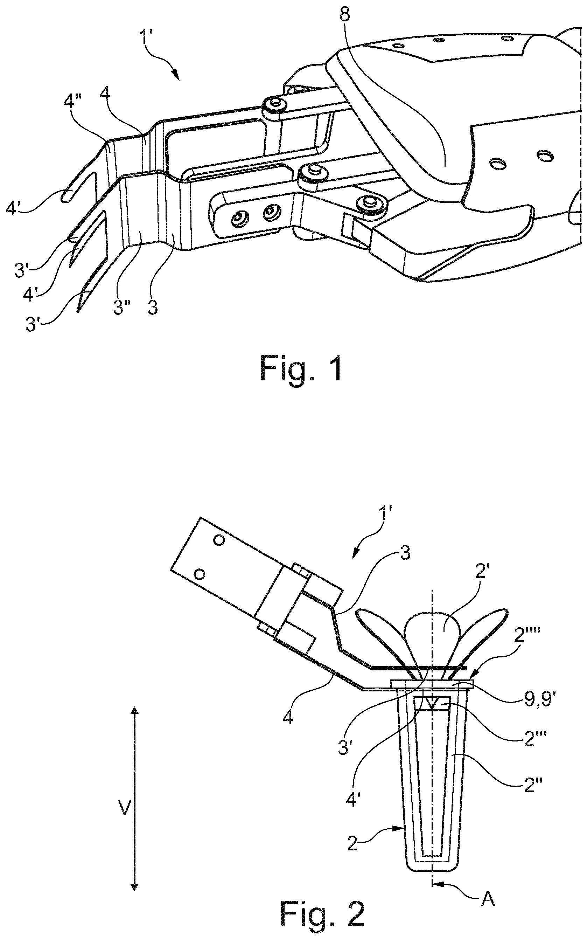

In **figure** 1, an inventive gripper head 1' for handling plants 2' or plant receptacles 2 in a vertical farming facility 20 is illustrated. The gripper head 1' forms the most distal part of a gripper 1 and allows for a connection to plants 2' or plant receptacles 2 by means of movable constituents. More specifically, the gripper head 1' comprises a first gripping element 3 and a second gripping element 4. Both gripping elements 3, 4 are manufactured of sheet metal and are curved and angled.

The first gripping element 3 comprises two first lateral holding arms 3', each first lateral holding arm 3' comprising a distal free end and a proximal end, the proximal ends being connected to an upper holding means 3". The first lateral holding arms 3' are spaced apart from and arranged parallel to each other. The free ends are at least partially tapered which facilitates positioning around plant receptacles 2.

Similarly, the second gripping element 4 comprises two second lateral holding arms 4', each second lateral holding arm 4' comprising a distal free end and a proximal end, the proximal ends being connected to a bottom holding means 4". The second lateral holding arms 4' are spaced apart from and arranged parallel to each other. The free ends are at least partially tapered which facilitates positioning around plant receptacles 2.

The gripping elements 3, 4 are widely alike in shape and size. They only differ in a single direction of bending. In other words, their manufacturing is almost entirely identical apart from a single manufacturing step. They are arranged parallel to each other and either one is connected to an articulated arm 8 by means of two bolts. The articulated arm 8 is rotatably supporting the gripper head 1'.

In **figure 2****,** a gripper head 1' according to a second embodiment of the invention is illustrated schematically in a side view. Also, a plant 2' that is arranged in a largely elongated plant receptacle 2 is depicted. A longitudinal axis A of the plant receptacle 2 is arranged parallel to a vertical direction V. The plant receptacle 2 comprises a base element 2" that is made of polyethylene but it is conceivable to employ other plastics or a biodegradable material as raw material for the production of the plant receptacle 2. The base element 2" forms a cavity 2‴ at an inward direction of the base element 2" wherein - along with the plant 2' - a potting compost can be filled. The plant 2' is protruding at least partly beyond a head section 2ʺʺ of the plant receptacle 2. Furthermore, at each of four sides of the plant receptacle 2 one respective recess is formed to save material and hence weight and costs. Most importantly, recesses enable advantageously the provision of water or a water solution that comprises nutrients to the plant receptacle 2 and the potting compost. Moreover, a circumferential rim 9 is formed at the higher end, with respect to figure 2, of the plant receptacle 2. The rim 9 comprises four rim portions 9', each rim portion 9' being arranged at one side of the base element 2". In addition, the rim 9 extends outwardly from all four sides of the base element 2" and is protruding the base element 2". The rim 9 or the rim portions 9' are arranged by and large perpendicular to the longitudinal axis A.

The gripper head 1' is shown in figure 2 in a release position, meaning that the first gripping element 3 and the second gripping element 4 are spaced apart from one another in the vertical direction V, wherein the first gripping element 3 is movably configured and serves as an upper gripping element, whereas the second gripping element 4 is non-movable and acts as a bottom gripping element. The wording release position refers in other words to the circumstance that the rim 9 is not clamped between the two first lateral holding arms 3' of the first gripping element 3 and the two second lateral holding arms 4' of the second gripping element 4. A gap is rather formed between the head section 2ʺʺ and the two first lateral holding arms 3' while the second lateral holding arms 4' support the rim 9 at two opposing sides of the plant receptacle 2, the second lateral holding arms 4' each supporting a rim portion 9'.

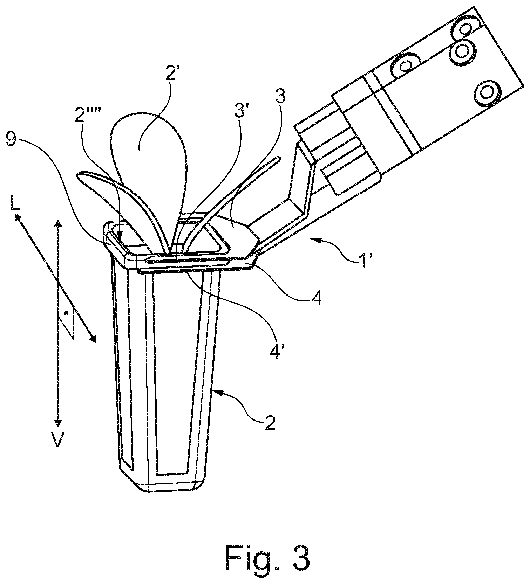

In **figure 3****,** the arrangement depicted in figure 2 and comprising the gripper head 1' along with the plant receptacle 2 and plant 2' is illustrated in a perspective view. Furthermore, the entire arrangement is shown in a clamping position. While the second lateral holding arms 4' supported the two opposing rim portions 9' the first lateral holding arms 3' moved downwards in the vertical direction V and in so doing clamped the rim 9. In figure 3, the respective displacement of the holding arms 3' and 4' in a lateral direction L is obvious, the lateral direction L being perpendicular to the vertical direction V.

In such a clamped position the plant receptacle 2 in conjunction with the plant 2' can be transported by the gripper 1 to a targeted position within the range of motion of the gripper 1, particularly to planting walls 20' according to an embodiment of the present invention, as will be further described hereafter.

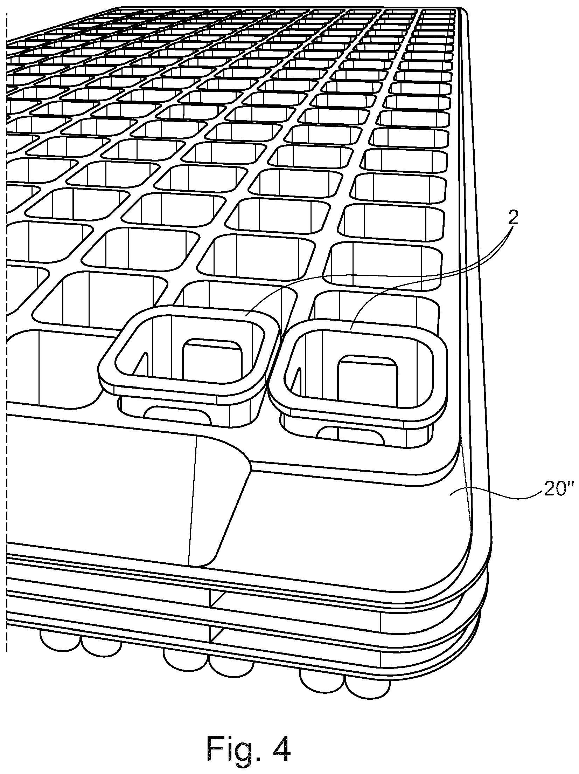

In **figure 4****,** an embodiment of a tray 20" according to the invention is illustrated. Exemplarily, two plant receptacles 2 - as they are shown in figure 2 and figure 3 - are arranged in the tray 20", where the tray 20" can be made of the same plastic as the plant receptacles 2. The sizes and geometries or the general three-dimensional design of the tray 20" and the plant receptacles 2 are matched to each other such that the plant receptacles 2 can be inserted in dedicated cavities in the tray 20" without much clearance. However, one imperative requirement in the configuration comprising the tray 20" and plant receptacles 2' is a sufficient protrusion of the plant receptacles 2 beyond a topmost edge of the tray 20" in order for an inventive gripper 1 or gripper head 1' to pick or seize unhinderedly and/or automatically the plant receptacles 2 by connecting to the rim 9 by means of clamping. It is also conceivable to elevate plant receptacles 2 from a tray 20" by merely supporting the rim 9 at least partially and hoisting it. In other words, clamping is not an absolute necessity to raise the plant receptacles 2 but can be indispensable for subsequent moves such as transporting along and around three spatial axes and deploying the plant receptacles 2 in a predefined position inside the vertical farming facility 20.

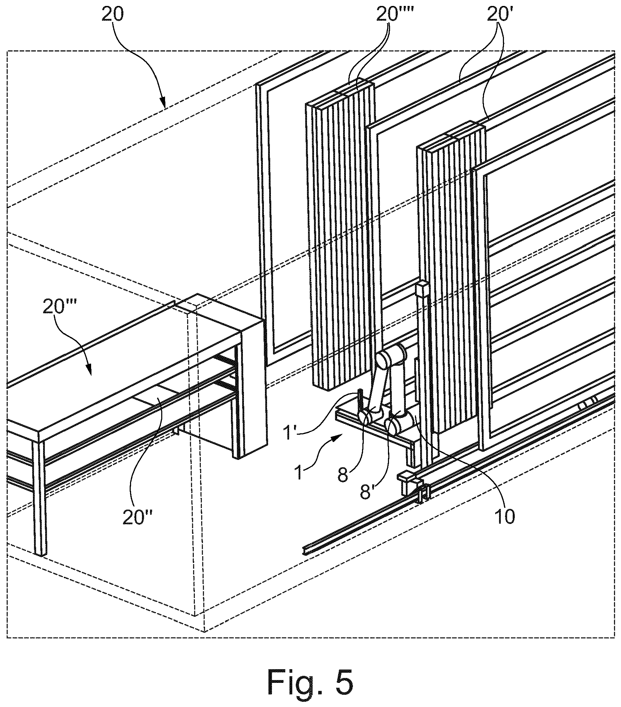

In **figure 5****,** an embodiment of a vertical farming facility 20, formed as a container, is illustrated. The figure 5 further illustrates a gripper 1 that is arranged inside the container 20. The gripper 1 comprises a gripper head 1', an articulated arm 8 that is rotatably supporting the gripper head 1'. Furthermore, the articulated arm 8 is pivotably connected to a further articulated arm 8' which is supported by a base member 10, wherein the base member 10 is fixed to the container 20. However, in an arrangement as shown in figure 5, it is conceivable that the base member 10 is rotatably connected to the container 20. All in all, rotation of the gripper head 1' around all three spatial axes can be performed. The dimensions of any constituent of the gripper 1 shown in figure 5 do not reflect real measures and/or proportions with respect to other illustrated objects but must rather be understood to be schematic.

The figure 5 further illustrates planting walls 20', a nursery station 20‴ that resembles at a glance a desk or a workbench, the nursery station 20‴ being positioned close to an entrance of the container 20, and finally a tray 20" that is arranged on a horizontal surface of the nursery station 20‴. The nursery station 20‴ comprises multiple surfaces to allow for a multitude of trays 20" to be set on the surfaces of the nursery station 20‴ at once.

The planting walls 20' are arranged parallel to each other and movably configured such that they keep parallelism relative to each other while in motion. The planting walls 20' are covered on either side with a foam material 20ʺʺ that help ensure mechanical stability of plants 2' or plant receptacles 2 inserted into the planting walls 20'. The planting walls 20' as well as the foam materials 20ʺʺ comprise multiple overlapping openings for plants 2' or plant receptacles 2 to be inserted therein. It is conceivable that each side of a planting wall 20' comprises a plurality of grooves that extend at different heights horizontally. In other words, each groove is arranged parallel to a ground or a container floor. Alternatively, the grooves can be arranged vertically, in other words, perpendicular to the ground or the container floor. In either case, openings in the foam material 20ʺʺ are arranged in an overlapping manner relative to the grooves.

In addition, the planting walls 20' are designed such that a water solution can stream through them and feed the plants 2' and/or plant receptacles 2 that are inserted into the walls 20' with nutrients necessary for the growth of the plants 2'. It is therefore crucial for successful cultivation to assure physical contact between the plant 2' and the water solution. For this purpose, a proper plant receptacle design - for instance as shown in figure 2 and figure 3 - is essential.

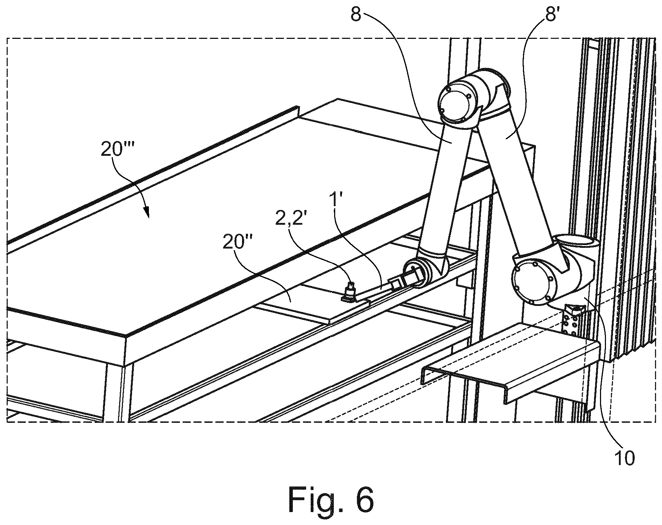

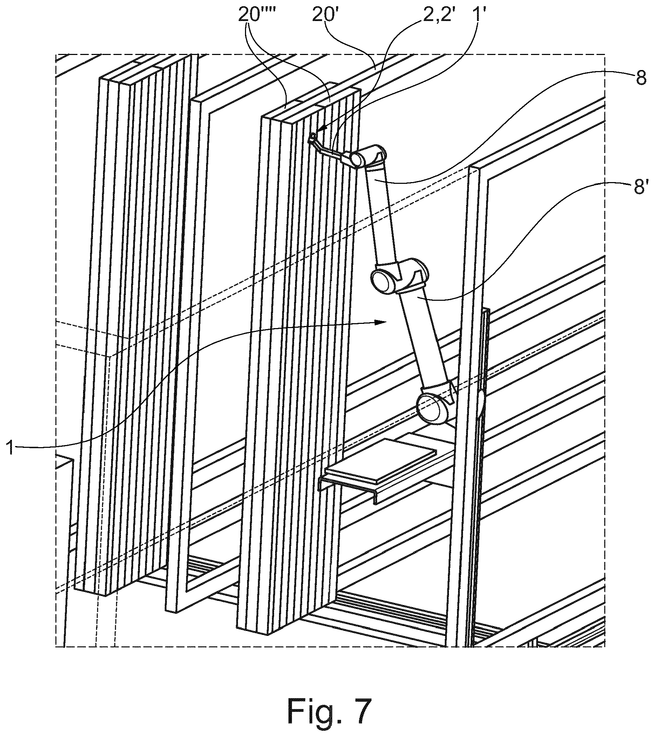

**Figure 6** illustrates a first step of an inventive method. The gripper 1 seizes a plant receptacle 2 with a plant 2' therein from the tray 20" that is arranged on one of the surfaces of the nursery station 20‴. Alternatively, prior to performing the first step of the method, the tray 20" could be seized by the gripper 1 from the nursery station 20‴ and transported elsewhere within the container 20 and placed down at a more suitable location. In other words, the nursery station 20‴ could be interpreted as a temporary store prior to carrying out the first step of the method. Following the first step, the picked plants 2' or plant receptacles 2 are placed by the gripper 1 in orifices of the vertical planting wall 20' in a second step, as shown in **figure 7****.** For this purpose, the gripper head 1' inserts the plants 2' and/or plant receptacles 2 through the foam material 20ʺʺ into the planting walls 20', thereby mechanically fixing the plants 2' and/or plant receptacles 2 in the planting wall 20'. Advantageously, the plants 2' and/or plant receptacles 2 are inserted such that the plants 2' and/or plant receptacles 2 have an angle with respect to the planting wall 20' or foam material 20"". Preferably, despite an eventual inclination of the plants 2', the plant leaves are at least partly directed to a ceiling of the container 20, where appropriate lighting devices are arranged for sufficient radiation of the plants 2' and therefore for successful cultivation.

During the first step of the method the connection between the gripper 1 and the plant 2' or plant receptacle 2 is realized by clamping. After having finished the second step of the method, the gripper head 1' releases the plants 2' or plant receptacles 2.

After successful cultivation, the plants 2' or plant receptacles 2 are removed from the planting wall 20' by the gripper 1 in a third step and placed onto the tray 20" by the gripper 1 in a fourth step.

### List of reference signs

- 1: Gripper
- 1': Gripper head

- 2: Plant receptacle
- 2': Plant
- 2": Base element
- 2‴: Cavity
- 2ʺʺ: Head section

- 3: First gripping element
- 3': First lateral holding arms
- 3": Upper holding means

- 4: Second gripping element
- 4': Second lateral holding arms
- 4": Bottom holding means

- 8: Articulated arm
- 8': Further articulated arm

- 9: Rim
- 9': Rim portion

- 10: Base member

- 20: Vertical farming facility, container
- 20': Planting wall
- 20": Tray
- 20‴: Nursery station
- 20ʺʺ: Foam material

- L: Lateral direction
- V: Vertical direction
- A: Longitudinal axis

## Claims

1. System (100) comprising a vertical farming facility (10),
a plant receptacle (2), wherein the plant receptacle (2) comprises a base element (2") providing a cavity (2‴) for a plant (2') and at least two rim portions (9'), wherein the two rim portions (9') extend outwardly from opposing sides of the base element (2"), wherein preferably the rim portions (9') are part of a single-piece circumferential rim (9) of the base element (2"), and
a gripper (1) for handling plants (2') or plant receptacles (2) in the vertical farming facility (10), wherein the gripper (1) comprises a gripper head (1') with a first gripping element (3) and a second gripping element (4), wherein the first gripping element (3) comprises two first lateral holding arms (3') and the second gripping element (4) comprises two second lateral holding arms (4'), wherein the gripper head (1') is transferable between a clamping position, in which the first gripping element (3) and the second gripping element (4) are located close to each other to clamp a plant (2') or plant receptacle (2) in between, and a release position, in which the first gripping element (3) and the second gripping element (4) are located apart from each other to release a plant (2') or plant receptacle (2), wherein in the clamping position the rim portions (9') of the base element (2") are clamped between the first gripping element (3) and the second gripping element (4) for connecting the plant receptacle (2) to the gripper (1).

2. System (100) according to claim 1, wherein each first lateral holding arm (3') has a protruding free end and wherein the free ends of the two first lateral holding arms (3') are spaced apart from each other along a lateral direction (L).

3. System (100) according to claim 1 or 2, wherein each second lateral holding arm (4') has a protruding free end and wherein the free ends of the two second lateral holding arms (4') are spaced apart from each other along a lateral direction.

4. System (100) according to any one of the preceding claims, wherein the first gripping element (3) and the second gripping element (4) are movable relative to each other along a vertical direction (V) being transverse to the lateral direction (L) to transfer the gripper head (1') between the clamping position and the release position.

5. System (100) according to any one of the preceding claims, wherein the first gripping element (3) is an upper gripping element, and the second gripping element (4) is a bottom gripping element, wherein the upper gripping element is movable along the vertical direction (V) relatively to the bottom gripping element.

6. System (100) according to any one of the preceding claims, wherein the upper gripping element comprises an upper holding means (3") to which the two first lateral holding arms (3') are connected, wherein the upper holding means is (3") angled or curved.

7. System (100) according to any one of the preceding claims, wherein the gripper (1) comprises an articulated arm (8), preferably rotatably, supporting the gripper head (1'), wherein the articulated arm (8) is pivotably connected to a further articulated arm (8') which is supported by a base member (10), wherein the articulated arm (8) and/or the further articulated arm (8') is pivotable around at least two independent spatial axes.

8. System (100) according to any one of the preceding claims, wherein the vertical farming facility (20) comprises an, in particular substantially vertical, planting wall (20'), wherein the planting wall (20') comprises multiple orifices, in particular grooves, into which plants (2') or plant receptacles (2) are insertable.

9. System (100) according to claim 8, wherein the gripper (1) is configured to pick and place plants (2') or plant receptacles (2) from or into the orifices of the planting wall (20').

10. Method for handling plants (2') or plant receptacles (2) in a vertical farming facility (20), wherein plants (2') or plant receptacles (2) are picked from a tray (20") in a first step by a gripper (1) for handling plants (2') or plant receptacles (2) in the vertical farming facility (10), wherein the gripper (1) comprises a gripper head (1') with a first gripping element (3) and a second gripping element (4), wherein the first gripping element (3) comprises two first lateral holding arms (3') and the second gripping element (4) comprises two second lateral holding arms (4'), wherein the gripper head (1') is transferable between a clamping position, in which the first gripping element (3) and the second gripping element (4) are located close to each other to clamp a plant (2') or plant receptacle (2) in between, and a release position, in which the first gripping element (3) and the second gripping element (4) are located apart from each other to release a plant (2') or plant receptacle (2),
wherein the first gripping element (3) is an upper gripping element,
wherein the upper gripping element (3) comprises an upper holding means (3"),
wherein the upper holding means is (3") angled or curved,
wherein the plant receptacle (2) comprises a base element (2") providing a cavity (2‴) for a plant (2') and at least two rim portions (9'),
wherein the two rim portions (9') extend outwardly from opposing sides of the base element (2"), wherein preferably the rim portions (9') are part of a single-piece circumferential rim (9) of the base element (2"),
wherein in the clamping position the rim portions (9') of the base element (2") are clamped between the first gripping element (3) and the second gripping element (4) for connecting the plant receptacle (2) to the gripper (1)
and wherein in a second step the picked plants (2') or plant receptacles (2) are placed by the gripper (1) in orifices of an, in particular substantially vertical, planting wall (20').

11. Method according to claim 10, wherein the gripper head (2) is transferred from the release position into the clamping position during the first step and wherein the gripper head (2) is transferred from the clamping position into the release position during the second step.

12. Method according to claim 11, wherein plants (2') or plant receptacles (2) are picked from the planting wall (20') by the gripper (1) in a third step and removed by the gripper (1) in a fourth step.

## Patentansprüche

1. System (100), umfassend eine vertikale Anbauanlage (10), einen Pflanzbehälter (2), wobei der Pflanzbehälter (2) ein Basiselement (2') umfasst, das einen Hohlraum (2") für eine Pflanze (2') und mindestens zwei Randabschnitte (9') bereitstellt, wobei sich die beiden Randabschnitte (9') von gegenüberliegenden Seiten des Basiselements (2') nach außen erstrecken, wobei die Randabschnitte (9') vorzugsweise Teil eines einteiligen umlaufenden Randes (9) des Basiselements (2") sind, und einen Greifer (1) zur Handhabung von Pflanzen (2') oder Pflanzbehältern (2) in der vertikalen Anbauanlage (10), wobei der Greifer (1) einen Greiferkopf (1') mit einem ersten Greifelement (3) und einem zweiten Greifelement (4) umfasst, wobei das erste Greifelement (3) zwei erste seitliche Haltearme (3') und das zweite Greifelement (4) zwei zweite seitliche Haltearme (4') umfasst, wobei der Greiferkopf (1') zwischen einer Klemmposition, in der das erste Greifelement (3) und das zweite Greifelement (4) nahe beieinander angeordnet sind, um eine Pflanze (2') oder einen Pflanzbehälter (2) dazwischen zu klemmen, und einer Freigabeposition, in der das erste Greifelement (3) und das zweite Greifelement (4) voneinander beabstandet angeordnet sind, um eine Pflanze (2') oder einen Pflanzbehälter (2) freizugeben, überführbar ist, wobei in der Klemmposition die Randabschnitte (9') des Basiselements (2') zwischen dem ersten Greifelement (3) und dem zweiten Greifelement (4) geklemmt sind, um den Pflanzbehälter (2) mit dem Greifer (1) zu verbinden.

2. System (100) nach Anspruch 1, wobei jeder erste seitliche Haltearm (3') ein vorstehendes freies Ende aufweist und wobei die freien Enden der beiden ersten seitlichen Haltearme (3') entlang einer lateralen Richtung (L) voneinander beabstandet sind.

3. System (100) nach Anspruch 1 oder 2, wobei jeder zweite seitliche Haltearm (4') ein vorstehendes freies Ende aufweist und wobei die freien Enden der beiden zweiten seitlichen Haltearme (4') entlang einer lateralen Richtung voneinander beabstandet sind.

4. System (100) nach einem der vorhergehenden Ansprüche, wobei das erste Greifelement (3) und das zweite Greifelement (4) relativ zueinander entlang einer vertikalen Richtung (V), die quer zur lateralen Richtung (L) verläuft, beweglich sind, um den Greiferkopf (1') zwischen der Klemmposition und der Freigabeposition zu überführen.

5. System (100) nach einem der vorhergehenden Ansprüche, wobei das erste Greifelement (3) ein oberes Greifelement ist und das zweite Greifelement (4) ein unteres Greifelement ist, wobei das obere Greifelement entlang der vertikalen Richtung (V) relativ zum unteren Greifelement beweglich ist.

6. System (100) nach einem der vorhergehenden Ansprüche, wobei das obere Greifelement eine obere Halteeinrichtung (3") umfasst, mit der die beiden ersten seitlichen Haltearme (3') verbunden sind, wobei die obere Halteeinrichtung (3") abgewinkelt oder gekrümmt ist.

7. System (100) nach einem der vorhergehenden Ansprüche, wobei der Greifer (1) einen Gelenkarm (8) umfasst, der vorzugsweise drehbar den Greiferkopf (1') trägt, wobei der Gelenkarm (8) schwenkbar mit einem weiteren Gelenkarm (8') verbunden ist, der von einem Basiselement (10) getragen wird, wobei der Gelenkarm (8) und/oder der weitere Gelenkarm (8') um mindestens zwei unabhängige Raumachsen schwenkbar ist.

8. System (100) nach einem der vorhergehenden Ansprüche, wobei die vertikale Anbauanlage (20) eine insbesondere im Wesentlichen vertikale Pflanzwand (20') umfasst, wobei die Pflanzwand (20') mehrere Öffnungen, insbesondere Nuten, umfasst, in die Pflanzen (2') oder Pflanzbehälter (2) einsetzbar sind.

9. System (100) nach Anspruch 8, wobei der Greifer (1) dazu konfiguriert ist, Pflanzen (2') oder Pflanzbehälter (2) aus den oder in die Öffnungen der Pflanzwand (20') aufzunehmen und zu platzieren.

10. Verfahren zur Handhabung von Pflanzen (2') oder Pflanzbehältern (2) in einer vertikalen Anbauanlage (20), wobei Pflanzen (2') oder Pflanzbehälter (2) in einem ersten Schritt von einer Schale (20') durch einen Greifer (1) zur Handhabung von Pflanzen (2') oder Pflanzbehältern (2) in der vertikalen Anbauanlage (10) aufgenommen werden, wobei der Greifer (1) einen Greiferkopf (1') mit einem ersten Greifelement (3) und einem zweiten Greifelement (4) umfasst, wobei das erste Greifelement (3) zwei erste seitliche Haltearme (3') und das zweite Greifelement (4) zwei zweite seitliche Haltearme (4') umfasst, wobei der Greiferkopf (1') zwischen einer Klemmposition, in der das erste Greifelement (3) und das zweite Greifelement (4) nahe beieinander angeordnet sind, um eine Pflanze (2') oder einen Pflanzbehälter (2) dazwischen zu klemmen, und einer Freigabeposition, in der das erste Greifelement (3) und das zweite Greifelement (4) voneinander beabstandet angeordnet sind, um eine Pflanze (2') oder einen Pflanzbehälter (2) freizugeben, überführbar ist, wobei das erste Greifelement (3) ein oberes Greifelement ist, wobei das obere Greifelement (3) eine obere Halteeinrichtung (3') umfasst, wobei die obere Halteeinrichtung (3') abgewinkelt oder gekrümmt ist, wobei der Pflanzbehälter (2) ein Basiselement (2") umfasst, das einen Hohlraum (2") für eine Pflanze (2') und mindestens zwei Randabschnitte (9') bereitstellt, wobei sich die beiden Randabschnitte (9') von gegenüberliegenden Seiten des Basiselements (2') nach außen erstrecken, wobei die Randabschnitte (9') vorzugsweise Teil eines einteiligen umlaufenden Randes (9) des Basiselements (2") sind, wobei in der Klemmposition die Randabschnitte (9') des Basiselements (2") zwischen dem ersten Greifelement (3) und dem zweiten Greifelement (4) geklemmt sind, um den Pflanzbehälter (2) mit dem Greifer (1) zu verbinden und wobei in einem zweiten Schritt die aufgenommenen Pflanzen (2') oder Pflanzbehälter (2) durch den Greifer (1) in Öffnungen einer insbesondere im Wesentlichen vertikalen Pflanzwand (20') platziert werden.

11. Verfahren nach Anspruch 10, wobei der Greiferkopf (2) während des ersten Schritts von der Freigabeposition in die Klemmposition überführt wird und wobei der Greiferkopf (2) während des zweiten Schritts von der Klemmposition in die Freigabeposition überführt wird.

12. Verfahren nach Anspruch 11, wobei Pflanzen (2') oder Pflanzbehälter (2) in einem dritten Schritt durch den Greifer (1) von der Pflanzwand (20') aufgenommen und in einem vierten Schritt durch den Greifer (1) entfernt werden.

## Revendications

1. Système (100) comprenant une installation d'agriculture verticale (10), un réceptacle pour plante (2), dans lequel le réceptacle pour plante (2) comprend un élément de base (2') fournissant une cavité (2") pour une plante (2') et au moins deux portions de rebord (9'), dans lequel les deux portions de rebord (9') s'étendent vers l'extérieur depuis des côtés opposés de l'élément de base (2'), dans lequel de préférence les portions de rebord (9') font partie d'un rebord circonférentiel monobloc (9) de l'élément de base (2"), et un préhenseur (1) pour manipuler des plantes (2') ou des réceptacles pour plantes (2) dans l'installation d'agriculture verticale (10), dans lequel le préhenseur (1) comprend une tête de préhension (1') avec un premier élément de préhension (3) et un second élément de préhension (4), dans lequel le premier élément de préhension (3) comprend deux premiers bras de maintien latéraux (3') et le second élément de préhension (4) comprend deux seconds bras de maintien latéraux (4'), dans lequel la tête de préhension (1') est transférable entre une position de serrage, dans laquelle le premier élément de préhension (3) et le second élément de préhension (4) sont situés près l'un de l'autre pour serrer une plante (2') ou un réceptacle pour plante (2) entre eux, et une position de libération, dans laquelle le premier élément de préhension (3) et le second élément de préhension (4) sont situés à distance l'un de l'autre pour libérer une plante (2') ou un réceptacle pour plante (2), dans lequel, dans la position de serrage, les portions de rebord (9') de l'élément de base (2') sont serrées entre le premier élément de préhension (3) et le second élément de préhension (4) pour connecter le réceptacle pour plante (2) au préhenseur (1).

2. Système (100) selon la revendication 1, dans lequel chaque premier bras de maintien latéral (3') a une extrémité libre saillante et dans lequel les extrémités libres des deux premiers bras de maintien latéraux (3') sont espacées l'une de l'autre le long d'une direction latérale (L).

3. Système (100) selon la revendication 1 ou 2, dans lequel chaque second bras de maintien latéral (4') a une extrémité libre saillante et dans lequel les extrémités libres des deux seconds bras de maintien latéraux (4') sont espacées l'une de l'autre le long d'une direction latérale.

4. Système (100) selon l'une quelconque des revendications précédentes, dans lequel le premier élément de préhension (3) et le second élément de préhension (4) sont mobiles l'un par rapport à l'autre le long d'une direction verticale (V) transversale à la direction latérale (L) pour transférer la tête de préhension (1') entre la position de serrage et la position de libération.

5. Système (100) selon l'une quelconque des revendications précédentes, dans lequel le premier élément de préhension (3) est un élément de préhension supérieur, et le second élément de préhension (4) est un élément de préhension inférieur, dans lequel l'élément de préhension supérieur est mobile le long de la direction verticale (V) par rapport à l'élément de préhension inférieur.

6. Système (100) selon l'une quelconque des revendications précédentes, dans lequel l'élément de préhension supérieur comprend un moyen de maintien supérieur (3") auquel les deux premiers bras de maintien latéraux (3') sont connectés, dans lequel le moyen de maintien supérieur (3") est angulaire ou incurvé.

7. Système (100) selon l'une quelconque des revendications précédentes, dans lequel le préhenseur (1) comprend un bras articulé (8), de préférence rotatif, supportant la tête de préhension (1'), dans lequel le bras articulé (8) est connecté de manière pivotante à un autre bras articulé (8') qui est supporté par un élément de base (10), dans lequel le bras articulé (8) et/ou l'autre bras articulé (8') sont pivotants autour d'au moins deux axes spatiaux indépendants.

8. Système (100) selon l'une quelconque des revendications précédentes, dans lequel l'installation d'agriculture verticale (20) comprend un mur de plantation (20'), en particulier sensiblement vertical, dans lequel le mur de plantation (20') comprend de multiples orifices, en particulier des rainures, dans lesquels des plantes (2') ou des réceptacles pour plantes (2) peuvent être insérés.

9. Système (100) selon la revendication 8, dans lequel le préhenseur (1) est configuré pour prendre et placer des plantes (2') ou des réceptacles pour plantes (2) depuis ou dans les orifices du mur de plantation (20').

10. Procédé de manipulation de plantes (2') ou de réceptacles pour plantes (2) dans une installation d'agriculture verticale (20), dans lequel des plantes (2') ou des réceptacles pour plantes (2) sont pris d'un plateau (20') dans une première étape par un préhenseur (1) pour la manipulation de plantes (2') ou de réceptacles pour plantes (2) dans l'installation d'agriculture verticale (10), dans lequel le préhenseur (1) comprend une tête de préhension (1') avec un premier élément de préhension (3) et un second élément de préhension (4), dans lequel le premier élément de préhension (3) comprend deux premiers bras de maintien latéraux (3') et le second élément de préhension (4) comprend deux seconds bras de maintien latéraux (4'), dans lequel la tête de préhension (1') est transférable entre une position de serrage, dans laquelle le premier élément de préhension (3) et le second élément de préhension (4) sont situés près l'un de l'autre pour serrer une plante (2') ou un réceptacle pour plante (2) entre eux, et une position de libération, dans laquelle le premier élément de préhension (3) et le second élément de préhension (4) sont situés à distance l'un de l'autre pour libérer une plante (2') ou un réceptacle pour plante (2), dans lequel le premier élément de préhension (3) est un élément de préhension supérieur, dans lequel l'élément de préhension supérieur (3) comprend un moyen de maintien supérieur (3'), dans lequel le moyen de maintien supérieur (3') est angulaire ou incurvé, dans lequel le réceptacle pour plante (2) comprend un élément de base (2") fournissant une cavité (2") pour une plante (2') et au moins deux portions de rebord (9'), dans lequel les deux portions de rebord (9') s'étendent vers l'extérieur depuis des côtés opposés de l'élément de base (2'), dans lequel de préférence les portions de rebord (9') font partie d'un rebord circonférentiel monobloc (9) de l'élément de base (2"), dans lequel, dans la position de serrage, les portions de rebord (9') de l'élément de base (2") sont serrées entre le premier élément de préhension (3) et le second élément de préhension (4) pour connecter le réceptacle pour plante (2) au préhenseur (1) et dans lequel, dans une deuxième étape, les plantes (2') ou réceptacles pour plantes (2) pris sont placés par le préhenseur (1) dans des orifices d'un mur de plantation (20'), en particulier sensiblement vertical.

11. Procédé selon la revendication 10, dans lequel la tête de préhension (2) est transférée de la position de libération à la position de serrage pendant la première étape et dans lequel la tête de préhension (2) est transférée de la position de serrage à la position de libération pendant la deuxième étape.

12. Procédé selon la revendication 11, dans lequel des plantes (2') ou des réceptacles pour plantes (2) sont pris du mur de plantation (20') par le préhenseur (1) dans une troisième étape et retirés par le préhenseur (1) dans une quatrième étape.
